(19) 

Europäisches Patentamt
European Patent Office
Office européen des brevets

(11)  EP 2 944 946 A1

(12)  EUROPEAN PATENT APPLICATION

(43) Date of publication:
18.11.2015  Bulletin 2015/47

(51) Int Cl.:
G01N 21/552 (2014.01)          G01N 21/27 (2006.01)

(21) Application number: 15164778.1

(22) Date of filing: 23.04.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 14.05.2014  DE 102014209084

(71) Applicant: Brandenburgische Technische
Universität
Cottbus-Senftenberg
03046 Cottbus (DE)

(72) Inventors:
• Nizamov, Shavkat
01968 Senftenberg (DE)
• Mirsky, Vladimir
01156 Dresden (DE)

(74) Representative: Jordan, Volker Otto Wilhelm et al
Weickmann & Weickmann
Patentanwälte
Postfach 860 820
81635 München (DE)

(54)  **SELF-REFERENCING SPR SENSOR BASED ON THE INTEGRATION OF ARBITRARILY DISTRIBUTED SENSING AND REFERENCING SPOTS**

(57)     Provided is a surface plasmon resonance sensor, in particular surface plasmon resonance chemo- and/or bio sensor, having a refractometric transducing arrangement for sensing at least one property or effect of interest on basis of an integral optical response from a receptor surface, in which
(A) the receptor surface has a plurality of surface portions (600, 601) of at least two different kinds which differ with respect to at least one of optical thickness, spectral properties, provision of immobilized plasmonic nanoparticles and affinity properties with respect to at least one analyte;
(B) the surface plasmon resonance sensor is operable such that optical response contributions to the integral optical response not relating to the property or effect of interest and originating from at least one, preferably plural surface portions of a first kind and optical response contributions to the integral optical response not relating to the property or effect of interest and originating from at least one, preferably plural surface portions of a second kind compensate each other at least partially in the integral optical response, so that the integral optical response substantially is governed by optical response contributions to the integral optical response relating to the property or effect of interest.

Fig. 9

## Description

Description of embodiments of the invention:

Surface plasmon resonance (SPR) is a widely used technology for sensing. Its principle is based on the strong dependence of resonance conditions between the light wave, incident on the sensor surface , and so called surface plasmon-polariton wave existing on the boundary of said surface with the liquid containing analytes to be detected. In resonance conditions the energy of incident light is effectively coupled to plasmons (free metallic electrons) thus the intensity of reflected light is decreased. Thus resonance conditions can be manifested by the dip in intensity of reflected light. The angular and/or spectral position of this dips is strongly dependent on the properties of film built on the sensor surface. Therefore the binding of the analytes to this surface causes the shift of the resonance dip.

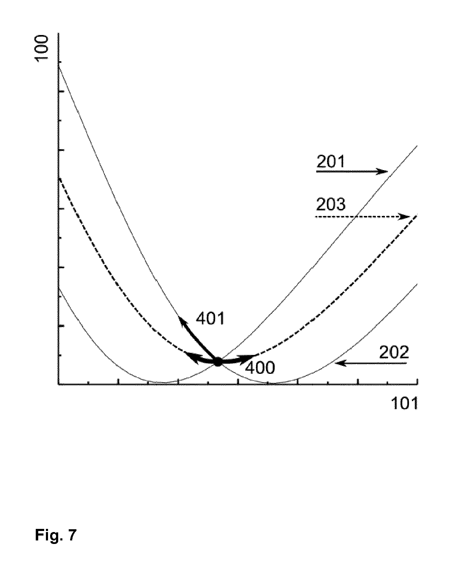

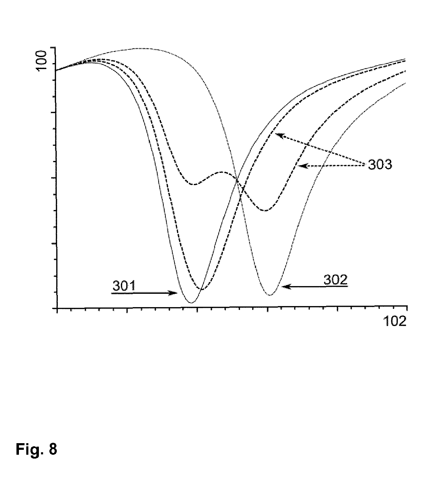

On the Fig. 7 and Fig. 8 the angular scan and the spectral scan of a SPR sensor is shown. The SPR curves are correspondingly shown as curves 201 and 301, which have some minimum which corresponds to the exact matching of resonance conditions. Upon the changes on the sensor surface the curves can shift, e.g. the binding of analytes causes curves shift to the right (curves 202 and 302 correspondingly). However, except the binding of analytes many other effects influence the SPR curves exhibiting similar shifts which might be erroneously perceived. Therefore most commercial SPR sensors along the sensor channel, where the analytes are presumably detected, implement also a sensor channel serving as reference channel which senses everything except the analyte binding. So one can take signal from the sensor channel, which along the desired sensor signal has also unknown amount of undesired contributions, and compensate all undesired contributions by the signal from the reference channel.

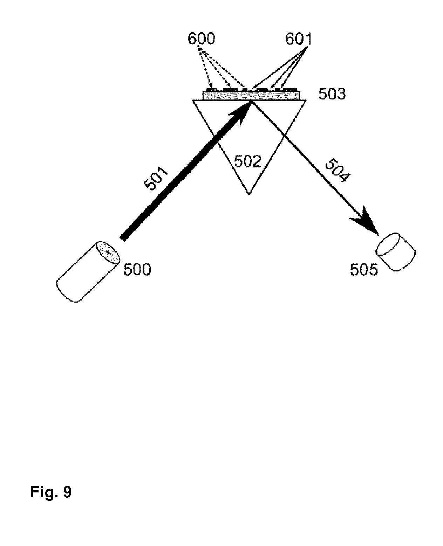

The implementation of reference channel can be done in many different ways. Generally the whole sensor surface is designated separately to the sensing and referencing areas, in which the SPR signals are measured and processed separately. The value of the suggested idea is mostly determined by that it is possible to achieve referencing without clearly designating the sensor/reference surfaces and using only a single measurement channel, thus greatly simplifying the measurement setup. It exploits the fact that the sign of the SPR response at some fixed angle and wavelength can be different. For instance, consider the SPR response curve 201 and 202 on the Fig. 7. Fixing the measurement angle between their minima (depicted on Fig. 7 by thick point) one can get the positive response for one curve and negative for another. So if both curves shift simultaneously in the same direction (e.g. due to the environmental changes) the net effect in this point will be zero (in other words, signals compensate each other because they have opposing signs). However, the shift of only one curve (e.g. due to the binding of analyte) will not be compensated in this manner and can therefore be still detected. So the surface which contains both sensing and referencing areas in roughly same ration will function as a whole as an SPR sensor with response curve given by 203 and 303 in Figs. 7 and 8. However, if the measurement conditions are close to the minima of these perceived curves, the surface as a whole will respond in manner depicted by 401 to the desired signal (analyte detection) and compensate an undesired signal (in a manner shown by 400). The same applies also in for the spectral readout (Fig. 8, curve 303). It is to note that in such arrangement the sensor area is considered as a single surface and correspondingly only a single measurement channel is required (see Fig. 9).

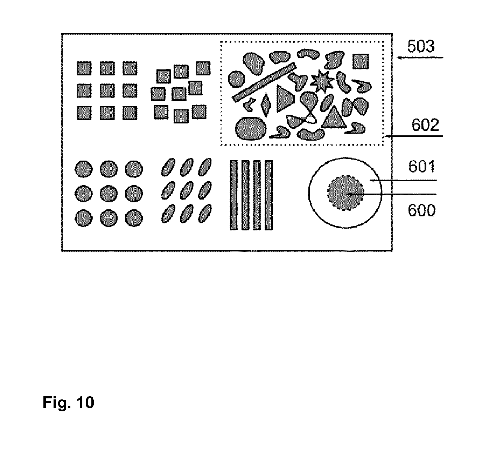

The spatial distribution and shape of the sensor and referencing areas can be chosen arbitrarily (see Fig. 10 for non-exhaustive list of possible arrangements), given that their surface areas are roughly the same (the ratio is between 1:1 and 3:1) and corresponding SPR response curves (201/202 on Fig. 7 or 301/302 on Fig. 8) partially overlap.

**Protection shall be obtained inter alia for the following items:**

A. Chemo- and/or biosensor with refractometric transducing which is based on the measurement of integral light intensity of the light reflected from a receptor surface in which:

(a) the receptor surface is the surface of solid body which has at least of two types of coatings so that at least two of them have different optical thickness and different affinity properties to the analyte. The difference in these optical thicknesses are chosen so that:

- the angles of minima of the surface plasmon resonance curves corresponding to these coatings are shifted in the angle axis
- the value of light intensity in the point of crosssection of these curves between their minima is in the range between 0.1% and 80% (better between 1% and 50%) from maximal intensity of the reflected light at conditions of total internal reflection

(b) the parts of the surface coverage which preferentially binds the analyte is in the range between 20% and 80%, preferentially between 30% and 70%.

(c) during the sensor operation the measurement of the reflected light is performed at the angle between positions of surface plasmon resonance minima of these coatings, while the wavelength and incidence angle are kept constant.

**B.** Chemo- and/or biosensor with refractometric transducing which is based on the measurement of integral light intensity of the light reflected from a receptor surface in which:

(a) the receptor surface is the surface of solid body which has at least of two types of coatings so that at least two of them have different optical thickness and different affinity properties to the analyte. The difference in these optical thicknesses are chosen so that:

- the wavelengths of minima of the surface plasmon resonance curves corresponding to these coatings are shifted in the wavelength axis

- the value of light intensity in the point of crosssection of these curves between their minima is in the range between 0.1% and 80% (better between 1% and 50%) from maximal intensity of the reflected light at conditions of total internal reflection

(b) the parts of the surface coverage which preferentially binds the analyte is in the range between 20% and 80%, preferentially between 30% and 70%.

(c) during the sensor operation the measurement of the reflected light is performed at the wavelength between positions of surface plasmon resonance minima of these coatings, while the wavelength and incidence angle are kept constant.

C. Chemo- and/or biosensor with refractometric transducing which is based on the measurement of integral light intensity of the light reflected (or transmitted) from a receptor surface in which:

(a) the receptor surface is the surface of solid body which has at least two kinds of immobilized plasmonic nanoparticles differing by their spectral properties and different affinity properties to the analyte. The difference in their spectral properties are chosen so that:

- the wavelengths of adsorption peaks of the spectral curves corresponding to these coatings are shifted in the wavelength axis

- the value of light intensity in the point of crosssection of these curves between their peaks is in the range between 10% and 80% (better between 20% and 50%) in the extinction scale from their peak intensity

(b) the parts of the surface coverage which preferentially binds the analyte is in the range between 20% and 80%, preferentially between 30% and 70% in the extinction scale.

(c) during the sensor operation the measurement of the reflected (or transmitted) light is performed at the wavelength between positions of peaks.

**D.** Surface plasmon resonance sensor, in particular surface plasmon resonance chemo- and/or bio sensor, having a refractometric transducing arrangement for sensing at least one property or effect of interest on basis of an integral optical response from a receptor surface, in which

(A) the receptor surface has a plurality of surface portions of at least two different kinds which differ with respect to at least one of optical thickness, spectral properties, provision of immobilized plasmonic nanoparticles and affinity properties with respect to at least one analyte;

(B) the surface plasmon resonance sensor is operable such that optical response contributions to the integral optical response not relating to the property or effect of interest and originating from at least one, preferably plural surface portions of a first kind and optical response contributions to the integral optical response not relating to the property or effect of interest and originating from at least one, preferably plural surface portions of a second kind compensate each other at least partially in the integral optical response, so that the integral optical response substantially is governed by optical response contributions to the integral optical response relating to the property or effect of interest.

E. Sensor according to item D, wherein the sensor comprises an arrangement for measureing an integral light intensity of light reflected from said receptor surface.

**F**. Method for sensing at least one property or effect of interest using a plasmon resonance sensor, in particular surface plasmon resonance chemo- and/or bio sensor, with refractometric transducing for sensing said at least one property or effect of interest on basis of measuring an integral optical response from a receptor surface, in which

(A) the receptor surface has a plurality of surface portions of at least two different kinds which differ with respect to at least one of optical thickness, spectral properties, provision of immobilized plasmonic nanoparticles and affinity properties with respect to at least one analyte;

(B) the surface plasmon resonance sensor is operated such that optical response contributions to the integral optical response not relating to the property or effect of interest and originating from at least one, preferably plural surface portions of a first kind and optical response contributions to the integral optical response not relating to the property or effect of interest and originating from at least one, preferably plural surface portions of a second kind compensate each other at least partially in the integral optical response, so that the integral optical response substantially is governed by optical response contributions to the integral optical response relating to the property or effect of interest.

G. Method according to item F, wherein an integral light intensity of light reflected from said receptor surface is measured.

According to preferred embodiment, at least one surface portion of the first kind is arranged to be located around at least one surface portion of the second kind in the receptor surface or/and at least one surface portion of the second kind is arranged to be located around at least one surface portion of the second kind in the receptor surface.

The surface portion or portions of the first kind may serve as sensing surface portion(s) for sensing said at least one property or effect of interest and the surface portion or portions of the second kind may serve as referencing surface portion(s) for compensating with respect to influences on the optical response which do not relate to the property or effect of interest.

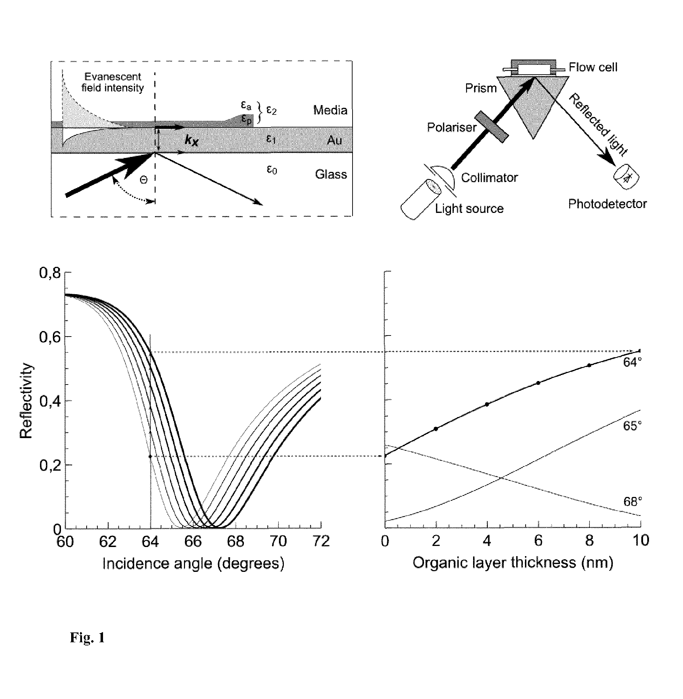

**The invention, the technical background of the invention and the effects and advantages achieved on basis of the invention are described in more detail in the following with reference to Figs. 1 to 6:**

**Brief Summary:**

SPR biosensors frequently need internal referencing. State of the art self-referencing SPR biosensors and a new method, free of some of their drawbacks, are reported. The method is technologically simple and applicable for a wide range of existing SPR instrumentation. It is based on the micropatterning of the sensor area with sensing and referencing areas, whose shape and distribution can be chosen arbitrarily. Provided that roughly half of the area should be devoted for the sensing area, its thickness is different from referencing area and the feature size of pattern is larger than the plasmons propagation length, suggested integral measurement over such patterned surface near the SPR minima angle exhibits self-referencing properties. The range and performance of suppression of the bulk refractive index changes and non-specific binding is dependent on this conditions. Suppression of bulk refraction index changes is demonstrated on the example of HSA-antiHSA binding.

**Introduction**

Since the introduction of biosensors based on the surface plasmon resonance [Liedberg 1983] they quickly become one of the most popular methods in biosensing. SPR biosensors are based on transducing the refractive index of surrounding media to the optical signal which can be measured in variety of ways [Homola 2006]. Coupling SPR sensor with selective coatings their affinity (selectivity) can be tailored for particular purposes - to sense particular compounds - biopolymers (proteins, DNA etc), toxins, drugs, ions etc [Scarano/Turner 2010]. However, such versatility has also a drawback that SPR sensors are sensitive to other unrelated changes in their direct environment - like changes in concentrations, temperature, density or non-specific adsorption, which also influence the refractive index of media. Here we describe the method of self-referencing in SPR biosensors, which is technologically simple and applicable in many commercial setups without modifications.

**SPR biosensing principle**

Theory and implementation of SPR biosensors is extensively described elsewhere, so we describe only information relevant to suggested method. In simplest case of SPR biosensing technologies the p-polarized light beam with narrow spectra and small divergence is used (see Fig. 1). The reflectivity of SPR biosensor (ratio of reflected and incident light intensities) in such case depends on the coupling condition of incident light to surface plasmons, which is described by well-known SPR equation:

$$k_x = \frac{2\pi}{\lambda}\sqrt{\frac{\varepsilon_1 \varepsilon_2}{\varepsilon_1 + \varepsilon_2}} = \frac{2\pi}{\lambda}\sqrt{\varepsilon_0}\sin\theta$$

where $\lambda$ is the free-space wavelength of incident light, $\theta$ its incidence angle, $\varepsilon_0$, $\varepsilon_1$ and $\varepsilon_2$ are dielectric permittivities of the glass, metal film and aqueous solution correspondingly. Plot of the reflectivity of SPR biosensor versus incidence angle (and/or wavelength) shows a strongly pronounced dip, whose exact position and shape depends also on $\varepsilon_2$- which characterizes the composition of the environment nearby the exposed metal surface. On Fig.1 such curves are shown for the SPR biosensor, consisting of 50 nm gold layer deposited on the high refractive index coupling prism (F2, n=1.6) with 2 nm Cr adhesion layer, exposed to the pure water. If a thin organic layer is deposited on the exposed surface then the curve shifts to the left. This shift characterizes the thickness of layer and the variety of methods are suggested for its measurement. In many cases, including the SPR imaging, it is most advantageous to fix both incidence angle and wavelength of the incident light (650 nm) and therefore measure the SPR curve only in one defined point. On Fig. 1 such case is shown - the incidence angle is fixed at 64° and the shift of the SPR curve to the left in response to the increasing organic layer thickness is observed as an increase of reflected light intensity. For the number of reasons the point with the highest slope on the descending part of SPR curve is taken (like shown at 64°), but this is not a mandatory requirement - for instance, fixing the incidence angle near to SPR minima (at 65°) one can get better signal to noise ratio even despite that the absolute change of intensity will be lower [Zybin et al 2007]. Even more, there is no reason why one can not take some point on the ascending part of SPR curve (on the right side from SPR minima, at 68°) - it has some disadvantages, but nevertheless applicable. It's main attractive point is that it has the similar amplitude but different sign of SPR response.

<Fig. 1>

However, SPR curves shift not only because of the changes of layer thickness or composition, the bulk behind this layer plays even more important role. Indeed, what SPR measures is the change of the effective refractive index [Jung et al 1998]:

$$n_{eff} = \frac{2}{z_2} \int n_2(z) * \exp(-2z/z_2)dz$$

where $n_2(z)$ is the distribution of refractive index in aqueous media, and $z_2$ is the penetration depth.

For the considered sensor layout the penetration depth is about 190 nm, so the contribution of a few nm's thick organic layer is much smaller than the contribution of bulk solution. This is the reason why referencing in SPR biosensors is so much important - the useful signal can be easily overwhelmed by the unrelated disturbance.

**State of the art self-referencing SPR biosensors**

For discrimination of signals, arising from adsorption of analytes to the sensor surface, from changes of the bulk refractive index many methods were suggested. The initial suggestion was to have a dedicated measurement channel where no analyte would be introduced or its adsorption would be hindered. Subtracting the signal in sensing channel from signal in referencing signal one can get the signal which only reflects the adsorption of analyte and compensates for bulk refractive index changes [Sigal et al.]. O'brien [1999] had shown that using reference and sensing channel both thermal and bulk composition effects can be suppressed simultaneously.

With advance of high-throughput SPR imaging sensors, where the binding of analytes over many spatially separated sensing spots is monitored, the same idea was applied. Since the much smaller distance between sensing and referencing spots the overall efficacy of such spatial referencing is increased [Boecker 2008]. The idea of having separate reference and sensing area in the same flow cell was extended in [Eddings 2009] to the case micro flow cell array. In each of 48 flow cell of this array two halves of surface are coated differently, and signals in the sensing spot is referenced to the signal of referencing spot by subtraction.

A polarization control SPR imaging was implemented in [Halpern 2011]. SPR phase shifts, measured separately in reference and sensing areas were suggested to self-referencing. In [Yu/Knoll 2004] sensing/referencing areas were patterned in such way (40 micron wide strips with 100 micron periodicity) that it acted as diffraction grating for surface plasmons. Monitoring the diffraction orders, selected by slit, it was shown that such patterned SPR sensor is inherently self-referencing. It is to note that there are works also on SPR biosensors using diffraction grating prepared from the gold layer itself [Adam eta al 2006], but since it utilizes features with the size of the same order as the wavelength of the incident light, it works on quite different principles and is better viewed in the frame of localized SPR sensors.

Methods for more drastical patterning of sensing and referencing spots also exist. In [Homola 2001, Lu 2001, Boozer 2003] reference channel was implemented as a thin dielectric overlay made from 12-18 nm thick deposition of $Ta_2O_5$. As a result the spectral band, associated with SPR in those areas, was shifted very much from that of sensing spot. 35 nm plasma polymerized hexamethyldisiloxane was suggested as a dielectric overlayer in [Akimoto 2003]. Using a broadband light source and a single channel spectrofotometer spectral bands of both reference and sense channels can be measured simultaneously. However, the spectral readout is difficult to implement in SPR imaging mode, which is normally associated with high-thoughput methods.

For the single wavelength SPR imaging applications similar methods were also developed. In [Piliarik 2007] two kinds of multilayer spots were used in pairs: differing by Ti sublayer of either 4 or 12 nm, on top of which 200 nm aluminum oxide and 40 nm gold layers are deposited. SPR response in each such element was measured. Since spots were designed in such way that they have different signs of response, their ratio showed an overall increased sensitivity to the SPR signal. For the referencing another pair can be used. In [Jung 2007] two schemes were suggested to micropattern referencing spots: either using a thick layer under the plasmonic layer to block the SPR altogether, or on top of it in order to saturate the SPR response. It is to note that patterning was to done only to separate spots from each other, not for referencing purposes. [Abbas 2011] the sensing and referencing areas are patterned in such way that gold wells are formed on the surface of SPR sensor. The bottom of the well has the quite typical layout - 2nm Cr/50 nm Au and serves as a sensing spot. To form the reference area on the rest of surface 100 nm of gold is additionally deposited. In [Limnan 2011] the same idea of microwells is used, but now the glass substrate itself is etched to form a microwells pattern and the whole area is coated by the gold of the same thickness. The conventional Fresnel multilayer consideration would show in such case that the response should be same both in the bottom of the well (sensing spots) and top surface (reference area), however FDTD simulation of SPR in such well shows that such microstructuring indeed influences the SPR conditions.

The interesting question on the minimal size of pattern features, which would still be considered as a a separate surfaces from the point of view of propagating surface plasmons wave is addressed in [Dhavan 2012]. It is shown that when the feature size of pattern is less that <100 nm then the surface exhibits monomodal SPR behavior (in other words the patterned layer is seen as a homogenous). On the other hand patterns with features sizes more that 10 micron exhibit purely bimodal SPR behavior. The intermediately sized patterns exhibit the mixture of both.

The drawback of laterally separated sensing and referencing areas is a loss of substantial part of the precious sensor surface to the referencing area. Besides, in case of the SPR imaging positions of the sensing spots have to be pre- or post-determined. That's why other self-referencing methods which discriminate the signals from adsorption and from bulk not by the means of a spatially displaced spots, but rather in-depth in the same place are suggested. The principle behind such methods is the strong dependence of the penetration depth of evanescent wave of surface plasmons on their mode [Slavic 2006][hastings 2007] or wavelength [Nizamov/Mirsky 2011]. In [Slavic 2006][Hastings2007] simultaneous excitation of regular surface plasmon and so called long-range surface plasmons with much higher penetration of evanescent field into surrounding media were exploited. To satisfy conditions for long-range plasmon excitation, a layer of dielectric with refractive index close to that of analyte solution should be placed between coupling prism and plasmonic layer. 350 nm teflon was used in [Slavic 2006], 450 nm in [Hastings]. Because the excitation of two different kinds of surface plasmons occurs at different wavelengths the spectral readout have to be used. In [Nizamov/Mirsky 2011] two wavelengths with a three times difference in penetration were used to suppress the bulk refractive index variations. The same system can be used for the thickness / refractive index of the adsorbed layer disambiguation, like suggested by [Peterlinz/Georgiadis 1996] and [Wischerhof]. Color separation filters embedded in most color image sensors provide some degree of spectral resolution. Using the diffraction grating and color camera SPR images of the patterned surface can be resolved onto colors of the camera (red, green and blue in order of decreasing sensitivity) [Singh 2007]. In [Wong 2011][Wong 2013] -the similar colorometric method but enhanced with polarization contrast was implemented. It is to note, that polarization control or contrast approaches were used also in many recent works [Piliarik 2007], [Abbas 2011][Linman 2011] and attributed to the reported enhancements in SPR resolution.

Advances in self-referencing SPR biosensor are not necessarily directed to compensate only for non-specific response - some works are devoted also to overcome instrumental drifts and noises, enhance the resolution [Piliarik/Homola 2008], [Zybin 2005] or more robust data analysis [Scarano 2010].

## Principle of suggested integral self-referencing in minima

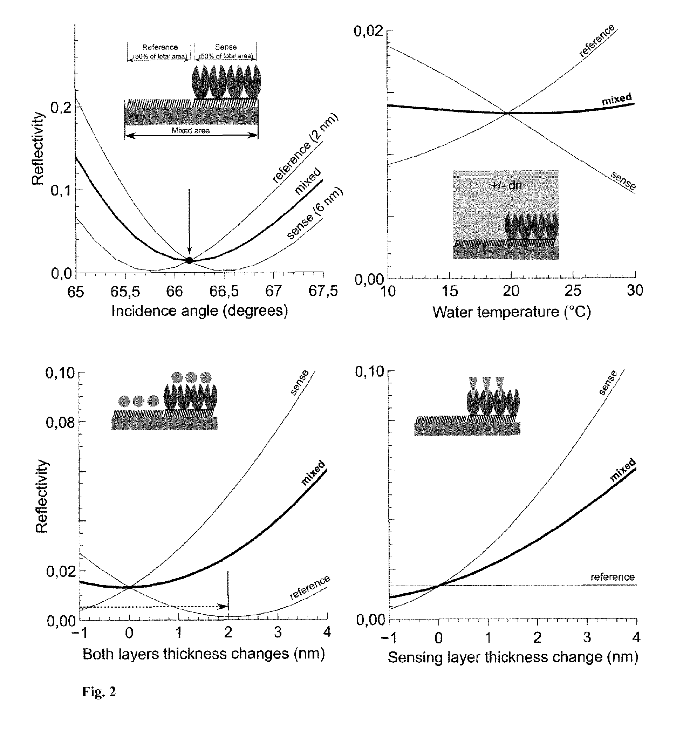

On Fig.2 the part of curves, corresponding to the 2nm and 6nm organic layer on the Fig1.1, is shown magnified. For the clarity, assume that 2nm thick layer represents a self-assembled functionalization layer which inhibits affine binding of analyte to it (further referred to as a "reference area"). 6 nm layer represents another self-assembled functionalization layer on top on which the selective receptor layer is formed (further referred to as a "sense area"). So the inherent thickness of receptors layer is assumed to be 4 nm, which is a typical size of many proteins like BSA/HSA.

Now assume that SPR signal is being measured (integrated) over some area which contains both such surfaces in approximately 50/50 ratio, patterned arbitrarily with feature size larger than the propagation length of plasmon. In such case, the integral signal over the area will be the sum of signals from both referencing and sensing areas. The integral SPR curve is somewhat broadened, compared to the SPR curve of respective areas, and its minima is placed between their minima. It is to note that in this point, where the integral SPR curve shows a minima, actually both SPR curves are not in the minima and therefore have notable SPR responce to the changes of effective refractive index. However, as noted above, their responses to the same change have opposing signs that's why changes affecting both curves simultaneously in the same way are mutually compensated. On Fig.2 responses of reference and sensing area to the bulk refractive index change (+/- 10 °C deviation of water temperature from the initial 20°C point, corresponding roughly to +700/-1000 microRIU) are shown. The integral signal shows effective suppression of such bulk changes. In case when layer thicknesses changes in both areas simultaneously the similar suppression is observed, however, as it is denoted by the arrow showing the position of SPR minima in reference channel, suppression is limited to the range where the fixed incidence angle remains between two SPR minima angles of referencing and sensing area. In case when the layer thickness changes only within the sense area and not within reference (as it happens e.g. during selective binding), the integral response will clearly exhibit it, with some attenuation owing to the fact than only the part of the surface is sensing.

So the core idea of method is quite simple: pattern the surface so that approximately half of it serves as a sensing and has different thickness than the referencing area. Measurement is performed integrally - over the whole area without separating sensing and referencing areas, with the incidence angle set roughly to the integral SPR minima. The extensive numerical simulation can not be provided here, but the method is quite robust to the coverage area: actually the optimal coverage by sensing area is in the range of 40-75%, with the optimal incidence angle slightly shifted to the left from the total minima.

It is to note that the model described here is not optimized, even more - it is close to be the worst possible case. The suppression range and performance of method increase with the separation between SPR curves. In current work we rely only on the inherent thickness of receptor layer, but addition of spacer to increase the thickness of the sensing layer the better separation between SPR curves (the larger compensation range) can be achieved. The wavelength of incident light plays an important role too because of the influence on the SPR dip width and the angular sensitivity. However, addition of some dielectric spacer between gold layer and receptor surface or shift of the wavelength of used SPR apparatus would add substantial complexity to the work.

<Fig. 2>

## Materials and Methods

### Materials

16-Mercaptohexadecanoic acid and 11-Mercaptoundecanol were purchased from Aldrich. EDC (1-ethyl-3-(3- dimethylaminopropyl)carbodiimide), human serum albumin (HSA), rabbit antibodies (whole serum) to HSA and glycine were from Sigma. Other salts and chemicals were from Merck. Millipore water was used for preparation of all working solutions. The gold coated glass (n=1.61) slides are 20 x 20 mm and 1mm thick. 50nm gold layer was deposited by thermal evaporation.

### Surface functionalization

Prior to functionalization all SPR slides were cleaned by immersing into the freshly prepared "pyranha solution" (1:3 mixture (v:v) of $H_2O_2$/$H_2SO_4$), rinsed thoroughly with water, ethanol and dried at room temperature. The mixed architecture SAM contains two types of thiols: referencing, non-functional OH-terminated C11-thiol (11-Mercaptoundecanol) and active, functional COOH-terminated C10-thiol (16-Mercaptohexadecanoic) was prepared by two steps. In the first step the RT-OH solution (5mM in DMSO) was dispensed by a non-contact arrayer sciFLEXARRAYER S3 covering about 40% of the total gold surface. After 10 minutes of incubation at room temperature the RT-OH spots were rinsed three times with ethanol and the gold slide was placed for 5 minutes in a AT-COOH solution (1mM in ethanol) in order to cover the rest 60% of surface. Afterword the gold slide was rinsed three times with ethanol and dried before the SPR measurement.

### SPR measurements

The sample solution was driven by a peristaltic pump with a flow rate of 180μl/min. The calibration step was performed with 12mM PBS pH 7.4 containing 140mM NaCl and 240mM NaCl. The covalent coupling of HSA to the active thiol compound (16-mercaptohexadecanoic acid) occurred in by addition of a 140mM NaCl solution containing 2mg/ml HSA and 10mg/ml EDC. After a wash step the antibody (anti-HSA) soluted in 12mM PBS, 140mM NaCl pH 7.4 was added. Removing of the bond antibodies was performed by treatment with aqueous solution of 10 mM glycine, 10 mM NaCl, pH 2. The measurement were done using commercial SPR setup Biosuplar-421. Beam diameter (and correspondingly the integration area) is ~ 3 mm.

## Results and discussion

In the present work we develop self referencing SPR-sensor with compensation of the bulk effect by structuring the surface with functionalized sensing (-COOH) and non-functional referencing area (-OH) area (see Fig.2). Thus, the refractive changes due to the binding of analyte might occur only at functionalized area which allows distinguishing between bulk effect and sample. For this purpose protein binding observations have been performed using HSA and anti-HSA as model system. First antigen-antibody binding was measured on SPR slide which were completely functionalized with COOH-thiols with incidence angle fixed near the point of steepest slope of SPR curve. Thus it represents the generic SPR biosensing measurement. Then SPR slides were patterned by (COOH- and OH-thiols) according to the suggested method and binding was measured with incidence angle fixed near the angle of minima. Finally, the sensitivity calibration of the system was performed by using different salt concentration both in maximal slope and minima angle modus.

### Generic SPR biosensing- without pattering the surface and using the whole area for sensing,

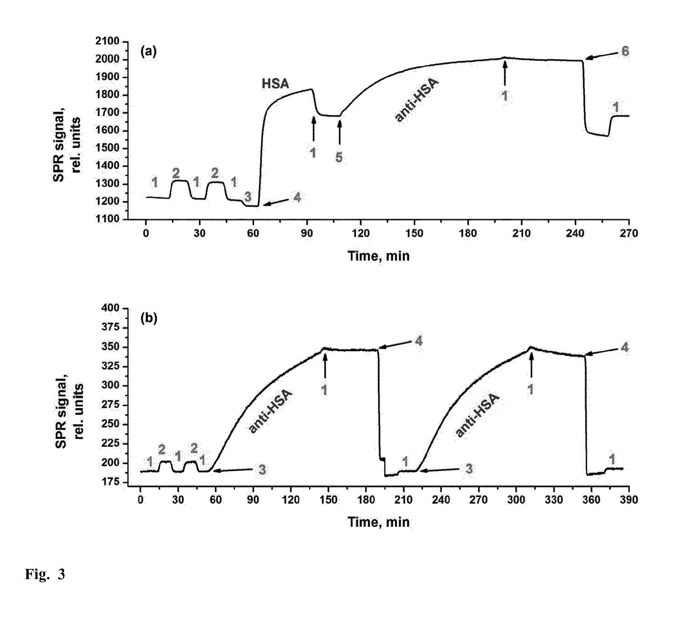

In order to compare the efficiency of the surface structure composed of functional and non-functional area the antigen-antibody binding experiments were performed on the COOH-functionalized gold surface by using standard SPR setup. In the first experimental step a covalent immobilization of HSA followed by anti-HSA binding was performed with the incident angle of the laser fixed at the SPR maximal slope angle. After regeneration of the SPR slide, where only HSA was covalently bound, the anti-HSA binding was performed with the incident angle of the laser fixed at the SPR minimum angle. Thus, the signal difference between the anti-HSA binding signal and the calibration signal can be compared. **Figure 3a** shows the corresponding SPR signal as function of time where HSA is covalently coupled to the COOH-groups and subsequent anti-HSA binding at the incident laser angle at maximal slope. This curve shows a typical behaviour of protein immobilization and antibody binding. The calculated signal of the antibody binding exceeds the calibration signal for about 3 times. **Figure 3b** depicts the SPR signal of signal of anti-HSA binding and its regeneration on the HSA modified surface for three times at the incident laser angle at minimum. The calculated signal of the antibody binding exceeds the calibration signal for about 13 times. Measurement of SPR response in the SPR minima suppresses some small bulk refractive index changes, however, it is to note that this suppression is specular and only represents the non-linearity of SPR response near the minima angle.

<Fig. 3>

*Surface functionalized by spots of OH-terminated alkylthiols with background formed by COOH-terminated alkylthiols*

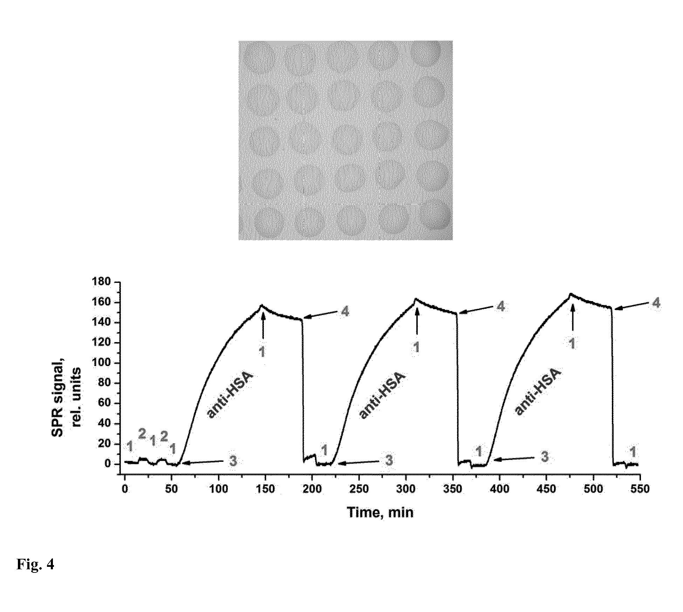

For the investigation of minimizing the bulk interactions the SPR slide was modified and patterned by two types of thiols with similar length but different tail groups. Thus, we introduced a referencing area of SAM by spotting the non-functional thiol (-OH) on the gold slide **(Figure 4)**. The spots distributed in a grid have an average diameter of about $200\mu$m and represent about 40% of the total surface area. The rest unmodified gold surface (60%) was covered afterwards with the functional thiol (-COOH). As a result gold SPR slide has a COOH/OH pattern. The binding experiments were performed in a similar way compared to the COOH-functionalized slides but the incident angle of the laser was fixed at the SPR minimum angle. **Figure 4a** shows the corresponding SPR signal of anti-HSA binding and its regeneration on the HSA modified surface for two times. The calculated signal of the antibody binding exceeds the calibration signal for about 42 times. Comparing Fig.4 and Fig.3 once can see that in the same conditions - namely near the SPR minima angle patterned surface exhibits about 3 times better suppression of bulk refractive index than non-patterned. This is the clear indication of suggested self-referencing method.

<Fig. 4>

*Calibration (12mM PBS pH 7.4 + [NaCl])*

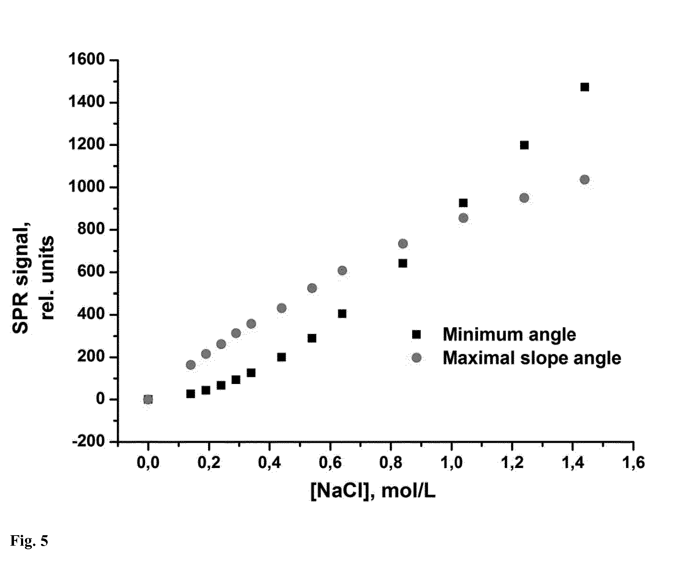

The problem of measurement near the SPR minima angle is that SPR response is noticeably nonlinear to the refractive index. We have to show that observed bulk refraction index suppression is due to the self-referencing and not due to the non-linearity of SPR response. For this purpose a calibration of SPR response by known NaCl concentration steps was performed using standard SPR measurement applying the incident angle of the laser fixed at both the SPR minimum angle and the SPR maximal slope angle (Fig.5).

<Fig. 5>

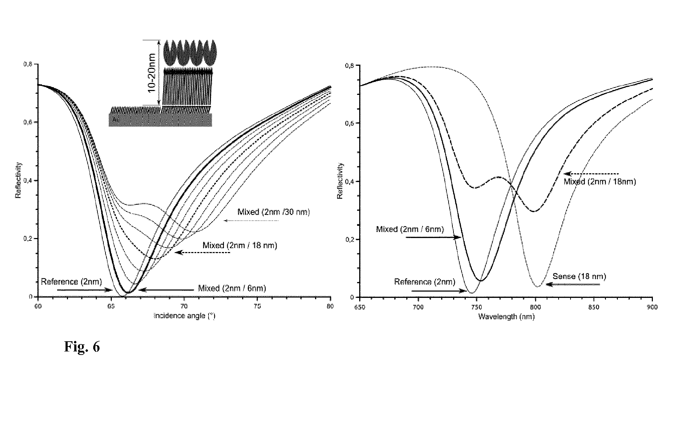

<Fig. 6>

On Fig.6 the development direction of suggested method is outlined. It was already mentioned that the example implementation of integral self-referencing method does not reveal its full potential. The reason behind choosing such example was to use as least invasion to the established functionalization chemistry of SPR biosensors. However, if this chemistry is slightly changed to allow larger height difference between referencing and sensing areas, the performance of method is going to be much higher than shown in current work. For instance, addition of some organic layer with the thickness in range 10-20 nm to increase the height difference of sensing area, the much wider separation of SPR curves can be achieved (see Fig.6, left). Another development direction might be the application of self-referencing in spectral domain (see Fig.6, right). It is to note, that contrary to the previous works, spectral separation must be much smaller and, despite functioning in spectral domain, it is enough to measure the reflectivity only at one single wavelength and incidence angle (e.g. 770 nm and 62 degreed, as shown on Fig.6).

Generalizing the idea, for surfaces patterned according to our suggestion, such wavelength and incidence angle can be found, at which the integral measurement will provide suppression of signal due to the bulk refractive index and non-specific binding.

A surface plasmon resonance sensor, in particular surface plasmon resonance chemo- and/or bio sensor, has a refractometric transducing arrangement for sensing at least one property or effect of interest on basis of an integral optical response from a receptor surface, in which

(A) the receptor surface has a plurality of surface portions of at least two different kinds which differ with respect to at least one of optical thickness, spectral properties, provision of immobilized plasmonic nanoparticles and affinity properties with respect to at least one analyte;

(B) the surface plasmon resonance sensor is operable such that optical response contributions to the integral optical response not relating to the property or effect of interest and originating from at least one, preferably plural surface portions of a first kind and optical response contributions to the integral optical response not relating to the property or effect of interest and originating from at least one, preferably plural surface portions of a second kind compensate each other at least partially in the integral optical response, so that the integral optical response substantially is governed by optical response contributions to the integral optical response relating to the property or effect of interest.

A corresponding method for sensing at least one property or effect of interest using a plasmon resonance sensor, in particular surface plasmon resonance chemo-and/or bio sensor, with refractometric transducing for sensing said at least one property or effect of interest on basis of measuring an integral optical response from a receptor surface is provided as well.

**References**

Abbas, A., M. J Limnan, and Q. Cheng. "Patterned Resonance Plasmonic Microarrays for High-Performance SPR Imaging." Analytical Chemistry (2011).
Adam, Pavel, Jakub Dostálek, and Jiří Homola. "Multiple Surface Plasmon Spectroscopy for Study of Biomolecular Systems." Sensors and Actuators B: Chemical 113, no. 2 (February 2006): 774-781. doi:10.1016/j.snb.2005.07.029.

Akimoto, T., K. Ikebukuro, and I. Karube. "A Surface Plasmon Resonance Probe with a Novel Integrated Reference Sensor Surface." Biosensors and Bioelectronics 18, no. 12 (2003): 1447-1453.

Bain, C.D., Troughton, E.B., Tao, Y.-T., Evall, J., Whitesides, G.M., and Nuzzo, R.G. "Formation of Monolayer Films by the Spontaneous Assembly of Organic Thiols from Solution onto Gold." J. Am. Chem. Soc. 111 (1989): 321-335.

Boecker, D., A. Zybin, V. Horvatic, C. Grunwald, and K. Niemax. "Differential Surface Plasmon Resonance Imaging for High-Throughput Bioanalyses." Analytical Chemistry 79, no. 2 (2007): 702-709.

Boecker, D., A. Zybin, K. Niemax, C. Grunwald, and V. M Mirsky. "Noise Reduction by Multiple Referencing in Surface Plasmon Resonance Imaging." Review of Scientific Instruments 79 (2008): 023110.

Boozer, Christina, Qiuming Yu, Shengfu Chen, Chi-Ying Lee, Jiří Homola, Sinclair S. Yee, and Shaoyi Jiang. "Surface Functionalization for Self-Referencing Surface Plasmon Resonance (SPR) Biosensors by Multi-Step Self-Assembly." Sensors and Actuators B: Chemical 90, no. 1-3 (April 2003): 22-30. doi:10.1016/S0925-4005(03)00017-0.

Dhavan, Anuj, Michael Canva, and Tuan Vo-Dinh. "Bimodal Behavior and Isobestic Transition Pathway in Surface Plasmon Resonance Sensing." Optics Express 20, no. 21 (October 8, 2012): 23630-23642.

Eddings, Mark A., Josh W. Eckman, Carlos A. Arana, Giuseppe A. Papalia, John E. Connolly, Bruce K. Gale, and David G. Myszka. "'Spot and Hop': Internal Referencing for Surface Plasmon Resonance Imaging Using a Three-Dimensional Microfluidic Flow Cell Array." Analytical Biochemistry 385, no. 2 (February 2009): 309-313. doi:10.1016/j.ab.2008.11.014.

Halpem, A. R, Y. Chen, R. M Corn, and D. Kim. "Surface Plasmon Resonance Phase Imaging Measurements of Patterned Monolayers and DNA Adsorption onto Microarrays." Analytical Chemistry (2011).

Hastings, J. T., J. Guo, P. D. Keathley, P. B. Kumaresh, Y. Wei, S. Law, L. G. Bachas, and others. "Optimal Self-Referenced Sensing Using Long-and Short-Range Surface Plasmons." Opt. Express 15, no. 26 (2007): 17661-17672.
Homola, Jiří, Hongbo B Lu, Garet G Nenninger, Jakub Dostálek, and Sinclair S Yee. "A Novel Multichannel Surface Plasmon Resonance Biosensor." Sensors and Actuators B: Chemical 76, no. 1-3 (June 2001): 403-410. doi:10.1016/S0925-4005(01)00648-7.

Jiri Homola. Surface Plasmon Resonance Based Sensors. Springer Series on Chemical Sensors and Biosensors Series, 2006.

Jung, Jaeyeon, Jong Seol Yuk, Kyunga Na, Okgene Kim, Jonghwan Lee, Kyusik Yun, Kwon-Soo Ha, and Jinho Hyun. "Polymeric Optical Microscreen for High-Resolution Surface Plasmon Resonance Microarray Imaging." Langmuir 23, no. 20 (September 2007): 10403-10406. doi:10.1021/1a7014836.

Jung, L. S, C. T Campbell, T. M Chinowsky, Mimi N. Mar, and S. S Yee. "Quantitative Interpretation of the Response of Surface Plasmon Resonance Sensors to Adsorbed Films." Langmuir 14, no. 19 (1998): 5636-5648.

Kasarova, Stefka Nikolova, Nina Georgieva Sultanova, Christo Dimitrov Ivanov, and Ivan Dechev Nikolov. "Analysis of the Dispersion of Optical Plastic Materials." Optical Materials 29, no. 11 (July 2007): 1481-1490. doi:10.1016/j.optmat.2006.07.010.

Liedberg, Bo, Claes Nylander, and Ingemar Lunstrom. "Surface Plasmon Resonance for Gas Detection and Biosensing." Sensors and Actuators 4 (1983): 299-304.

Linman, M. J, A. Abbas, C.C. Roberts, and Quan Cheng. "Etched Glass Microarrays with Differential Resonance for Enhanced Contrast and Sensitivity of Surface Plasmon Resonance Imaging Analysis." Analytical Chemistry 83 (2011): 5936-5943. doi:dx.doi.org/10.1021/ac200881q.

Lu, Hongbo B., Ji\vrí Homola, Charles T. Campbell, Garet G. Nenninger, Sinclair S. Yee, and Buddy D. Ratner. "Protein Contact Printing for a Surface Plasmon Resonance Biosensor with on-Chip Referencing." Sensors and Actuators B: Chemical 74, no. 1 (2001): 91-99.

Nizamov, Shavkat, and Vladimir M. Mirsky. "Self-Referencing SPR-Biosensors Based on Penetration Difference of Evanescent Waves." Biosensors and Bioelectronics 28, no. 1 (October 2011): 263-269. doi:10.1016/j.bios.2011.07.030.

O'Brien II, Michael J., S. R. J. Brueck, Victor H. Perez-Luna, Leonard M. Tender, and Gabriel P. Lopez. "SPR Biosensors: Simultaneously Removing Thermal and Bulk-Composition Effects." Biosensors and Bioelectronics 14, no. 2 (1999): 145-154.

Peterlinz, K. A., and R. Georgiadis. "Two-Color Approach for Determination of Thickness and Dielectric Constant of Thin Films Using Surface Plasmon Resonance Spectroscopy." Optics Communications 130, no. 4 (1996): 260-266.

Piliarik, Marek, and Jiří Homola. "Self-Referencing SPR Imaging for Most Demanding High-Throughput Screening Applications." Sensors and Actuators B: Chemical 134, no. 2 (September 25, 2008): 353-355. doi:10.1016/j.snb.2008.06.011.

Piliarik, M, H Vaisocherova, and J Homola. "Towards Parallelized Surface Plasmon Resonance Sensor Platform for Sensitive Detection of Oligonucleotides." Sensors and Actuators B: Chemical 121, no. 1 (January 30, 2007): 187-193. doi:10.1016/j.snb.2006.09.009.

Scarano, Simona, Marco Mascini, Anthony P.F. Turner, and Maria Minunni. "Surface Plasmon Resonance Imaging for Affinity-Based Biosensors." Biosensors and Bioelectronics 25, no. 5 (January 15,2010): 957-966. doi:10.1016/j.bios.2009.08.039.

Scarano, Simona, Cosimo Scuffi, Marco Mascini, and Maria Minunni. "Surface Plasmon Resonance Imaging (SPRi)-Based Sensing: A New Approach in Signal Sampling and Management." Biosensors and Bioelectronics 26, no. 4 (December 2010): 1380-1385. doi:10.1016/j.bios.2010.07.056.

Sigal, George B., Milan Mrksich, and George M. Whitesides. "Using Surface Plasmon Resonance Spectroscopy To Measure the Association of Detergents with Self-Assembled Monolayers of Hexadecanethiolate on Gold." Langmuir 13, no. 10 (May 1997): 2749-2755. doi:10.1021/1a961024f.

Singh, Bipin K., and Andrew C. Hillier. "Multicolor Surface Plasmon Resonance Imaging of Ink Jet-Printed Protein Microarrays." Analytical Chemistry 79, no. 14 (July 2007):5124-5132. doi:10.1021/ac070755p,

Slavik, Radan, Jiří Homola, and Hana Vaisocherová. "Advanced Biosensing Using Simultaneous Excitation of Short and Long Range Surface Plasmons." Measurement Science and Technology 17, no. 4 (April 1, 2006): 932-938, doi:10.1088/0957-0233/17/4/045.

Wagner, W. R, and A Pruss. "The IAPWS Formulation 1995 for the Thermodynamic Properties of Ordinary Water Substance for General and Scientific Use." J. Phys. Chem. Ref. Data 31, no. 2 (2002): 387-535.

Wong, Chi Lok, George Chung Kit Chen, Xiaochao Li, Beng Koon Ng, Ping Shum, Peng Chen, Zhiping Lin, Chinlon Lin, and Malini Olivo. "Colorimetric Surface Plasmon Resonance Imaging (SPRI) Biosensor Array Based on Polarization Orientation." Biosensors and Bioelectronics 47 (September 2013): 545-552. doi:10.1016/j.bios.2013.02.040.

Wong, Chi Lok, George Chung Kit Chen, Beng Koon Ng, Shuchi Agarwal, Zhiping Lin, Peng Chen, and Ho Pui Ho. "Multiplex Spectral Surface Plasmon Resonance Imaging (SPRI) Sensor Based on the Polarization Control Scheme." Optics Express 19, no. 20 (2011): 18965-18978.

Yu, Fang, and Wolfgang Knoll. "Immunosensor with Self-Referencing Based on Surface Plasmon Diffraction." Analytical Chemistry 76, no. 7 (April 2004): 1971-1975. doi:10.1021/ac035369w.

Zacher, Thomas, and Erik Wischerhoff. "Real-Time Two-Wavelength Surface Plasmon Resonance as a Tool for the Vertical Resolution of Binding Processes in Biosensing Hydrogels." Langmuir 18, no. 5 (March 2002): 1748-1759. doi:10.1021/1a0155707.

Zybin, Alexander, Daniel Boecker, Vladimir M. Mirsky, and Kay Niemax. "Enhancement of the Detection Power of Surface Plasmon Resonance Measurements by Optimization of the Reflection Angle." Analytical Chemistry 79, no. 11 (June 2007): 4233-4236. doi:10.1021/ac070074u.

Zybin, Alexander, Christian Grunwald, Vladimir M. Mirsky, Jürgen Kuhlmann, Otto S. Wolfbeis, and Kay Niemax. "Double-Wavelength Technique for Surface Plasmon Resonance Measurements: Basic Concept and Applications for Single Sensors and Two-Dimensional Sensor Arrays." Analytical Chemistry 77, no. 8 (April 2005): 2393-2399. doi:10.1021/ac048156v.

**Captions for Figures 1 to 10:**

**Fig.1:**

Top: principle of surface plasmon resonance and principle of SPR measurement.

Bottom, left: SPR curves (2nm Cr / 50 nm Au sensor, deposited on top of F2 glass, wavelength 650 nm) for increasing thickness of PMMA layer (0,2,4,6,8 and 10 nm denoted by increasing linewidth of curve) in water. Because of the lack of literature data on optical properties of dry proteins, the properties of polymethylmethacrylate (PMMA) [Kasarova et al. 2007] were used instead. Refractive indices: glass F2-1.6154, Cr: 3.1045 + 3.3273i, Au: 0.1678 + 3.1377i, PMMA: 1.4882, water: 1.3317.
Bottom, right: SPR sensogramm reflecting the increase of organic layer thickness with the fixed incidence angle (64, 65 and 68 °).

**Fig.2:**

SPR curves of the referencing and sensing area, as well as the integral SPR curve of the their 50/50 mixed area. Suppression of bulk refraction index changes on example of water temperature changes. The temperature dependence of water refractive index was calculated according to [Wagner, Pruss, 2002].

**Fig. 3:**

SPR responses as function of time. (a) covalent coupling of HSA via EDC and subsequent anti-HSA binding. Incident laser at maximal slope angle. 1 = 12mM PBS+140mM NaCl pH 7.4; 2 = 12mM PBS+240mM NaCl pH 7.4; 3 = 140mM NaCl; 4 = 2mg/ml HSA + 10mg/ml EDC in 140mM NaCl; 5 = 8μg/ml anti-HSA in 12mM PBS+140mM NaCl pH 7.4; 6 = 10mM NaCl + 10mM Glycine pH 2. (b) interaction of anti-HSA on HSA-modified gold slide. Incident laser at minimum angle. 1 = 12mM PBS+140mM NaCl pH 7.4; 2 = 12mM PBS+240mM NaCl pH 7.4; 3 = 8μg/ml anti-HSA in 12mM PBS+140mM NaCl pH 7.4; 4 = 10mM NaCl + 10mM Glycine pH 2.

**Fig. 4:**

Top: microscopic 10x zoom image of droplets of 5mM 11-Mercaptoundecanol (non-functional thiol) in DMSO on gold slide. Approximate droplet diameter counts 200μm.
Bottom: SPR responses as function of time of the interaction of anti-HSA on HSA-modified gold slide. Incident laser at minimum angle. 1 = 12mM PBS+140mM NaCl pH 7.4; 2 = 12mM PBS+240mM NaCl pH 7.4; 3 = 8μg/ml anti-HSA in 12mM PBS+140mM NaCl pH 7.4; 4 = 10mM NaCl + 10mM Glycine pH 2.

**Fig. 5:**

Difference of SPR signal between NaCl and water. 12mM PBS pH 7.4 with different NaCl concentrations was applied: from 140mM to 1440mM.

**Fig. 6:**

Development direction of suggested method. Left) increase of height difference from 4 nm up to 30 nm the better separation between SPR curves can be achieved. Right) Method can be used also in spectral domain (incidence angle set to 62 degrees).

**Fig 7:**

Dip of SPR curves manifested in angular scan. Axis: 101 - incidence angle of the beam with some fixed wavelength, 100 - intensity of reflected light. 201,202: SPR curves for the different layer composition.

**Fig 8:**

Dip of SPR curves manifested spectrally. Axis: 101 - wavelength of the light with some fixed incidence angle. 100 - intensity of reflected light. 301, 302: SPR curves for the different layer composition.

**Fig. 9:**

The typical arrangement of single channel SPR sensor. 500 - Light source, 501-collimated light beam, 502- prism or grating coupler, 504 - reflected light which is measured by photodetector 505. SPR sensor is depicted as a thin metallic layer 503, on which the sensing and referencing areas are formed (600/601).

**Fig. 10:**

Examples of possible arrangements of sensing (or referencing) areas, the rest of the surface is referencing (or sensing) areas. 503 - the sensor surface, 601 and 600 are sensing (referencing) areas. The sensing and referencing spots (601 and 602) together form the surface 602 which is measured as the whole. Here and in the whole text two possibilities are considered: (i) 600 is sensing areaa, 601 is referencing area or (ii) 600 is referencing area while 601 is sensing area.

## Claims

1. Surface plasmon resonance sensor, in particular surface plasmon resonance chemo- and/or bio sensor, having a refractometric transducing arrangement for sensing at least one property or effect of interest on basis of an integral optical response from a receptor surface, in which

    (A) the receptor surface has a plurality of surface portions of at least two different kinds which differ with respect to at least one of optical thickness, spectral properties, provision of immobilized plasmonic nanoparticles and affinity properties with respect to at least one analyte;
    (B) the surface plasmon resonance sensor is operable such that optical response contributions to the integral optical response not relating to the property or effect of interest and originating from at least one, preferably plural surface portions of a first kind and optical response contributions to the integral optical response not relating to the property or effect of interest and originating from at least one, preferably plural surface portions of a second kind compensate each other at least partially in the integral optical response, so that the integral optical response substantially is governed by optical response contributions to the integral optical response relating to the property or effect of interest.

2. Sensor according to claim 1, wherein the sensor comprises an arrangement for measureing an integral light intensity of light reflected from said receptor surface.

3. Method for sensing at least one property or effect of interest using a plasmon resonance sensor, in particular surface plasmon resonance chemo- and/or bio sensor, with refractometric transducing for sensing said at least one property or effect of interest on basis of measuring an integral optical response from a receptor surface, in which

    (A) the receptor surface has a plurality of surface portions of at least two different kinds which differ with respect to at least one of optical thickness, spectral properties, provision of immobilized plasmonic nanoparticles and affinity properties with respect to at least one analyte;
    (B) the surface plasmon resonance sensor is operated such that optical response contributions to the integral optical response not relating to the property or effect of interest and originating from at least one, preferably plural surface portions of a first kind and optical response contributions to the integral optical response not relating to the property or effect of interest and originating from at least one, preferably plural surface portions of a second kind compensate each other at least partially in the integral optical response, so that the integral optical response substantially is governed by optical response contributions to the integral optical response relating to the property or effect of interest.

4. Method according to claim 3, wherein an integral light intensity of light reflected from said receptor surface is measured.

5. Chemo- and/or biosensor with refractometric transducing, which is based on the measurement of integral light intensity of the light reflected from a receptor surface, in which:

    (a) the receptor surface is the surface of solid body which has at least of two types of coatings so that at least two of them have different optical thickness and different affinity properties to the analyte, the difference in these optical thicknesses are chosen so that:

        - the angles of minima of the surface plasmon resonance curves corresponding to these coatings are shifted in the angle axis,
        - the value of light intensity in the point of crosssection of these curves between their minima is in the range between 0.1 % and 80% (better between 1% and 50%) from maximal intensity of the reflected light at conditions of total internal reflection,

    (b) the parts of the surface coverage which preferentially binds the analyte is in the range between 20% and 80%, preferentially between 30% and 70%,
    (c) during the sensor operation the measurement of the reflected light is performed at the angle between positions of surface plasmon resonance minima of these coatings, while the wavelength and incidence angle are kept constant.

6. Chemo- and/or biosensor with refractometric transducing which is based on the measurement of integral light intensity of the light reflected from a receptor surface in which:

(a) the receptor surface is the surface of solid body which has at least of two types of coatings so that at least two of them have different optical thickness and different affinity properties to the analyte, the difference in these optical thicknesses are chosen so that:

- the wavelengths of minima of the surface plasmon resonance curves corresponding to these coatings are shifted in the wavelength axis,
- the value of light intensity in the point of crosssection of these curves between their minima is in the range between 0.1% and 80% (better between 1% and 50%) from maximal intensity of the reflected light at conditions of total internal reflection,

(b) the parts of the surface coverage which preferentially binds the analyte is in the range between 20% and 80%, preferentially between 30% and 70%,
(c) during the sensor operation the measurement of the reflected light is performed at the wavelength between positions of surface plasmon resonance minima of these coatings, while the wavelength and incidence angle are kept constant.

7. Chemo- and/or biosensor with refractometric transducing which is based on the measurement of integral light intensity of the light reflected (or transmitted) from a receptor surface in which:

(a) the receptor surface is the surface of solid body which has at least two kinds of immobilized plasmonic nanoparticles differing by their spectral properties and different affinity properties to the analyte, the difference in their spectral properties are chosen so that:

- the wavelengths of adsorption peaks of the spectral curves corresponding to these coatings are shifted in the wavelength axis,
- the value of light intensity in the point of crosssection of these curves between their peaks is in the range between 10% and 80% (better between 20% and 50%) in the extinction scale from their peak intensity,

(b) the parts of the surface coverage which preferentially binds the analyte is in the range between 20% and 80%, preferentially between 30% and 70% in the extinction scale,
(c) during the sensor operation the measurement of the reflected (or transmitted) light is performed at the wavelength between positions of peaks.

8. Sensor according to claim 1 or 2, **characterized by** features of the sensor as defined in one of claims 5 to 7.

9. Method according to claim 3 or 5, **characterized by** features of the method of operating the sensor as set forth of in one of claims 5 to 7.

**Fig. 1**

**Fig. 2**

Fig. 3

Fig. 4

Fig. 5

Fig. 6

Fig. 7

Fig. 8

**Fig. 9**

EP 2 944 946 A1

Fig. 10

23

Europäisches
Patentamt

European
Patent Office

Office européen
des brevets

# EUROPEAN SEARCH REPORT

Application Number

EP 15 16 4778

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | NIZAMOV SHAVKAT ET AL: "Self-referencing SPR-sensor based on integral measurements of light intensity reflected by arbitrarily distributed sensing and referencing spots", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, vol. 207, 12 October 2014 (2014-10-12), pages 740-747, XP029107827, ISSN: 0925-4005, DOI: 10.1016/J.SNB.2014.10.022 * the whole document * ----- | 1-9 | INV. G01N21/552 G01N21/27 |
| X | DE 44 24 336 A1 (SIGL HUBERT [DE]) 18 January 1996 (1996-01-18) * the whole document * ----- | 1-6,8,9 | |

TECHNICAL FIELDS
SEARCHED      (IPC)

G01N

The present search report has been drawn up for all claims

| Place of search | Date of completion of the search | Examiner |
|---|---|---|
| Munich | 30 September 2015 | Hoogen, Ricarda |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

................................................................

& : member of the same patent family, corresponding
     document

EPO FORM 1503 03.82 (P04C01)

**ANNEX TO THE EUROPEAN SEARCH REPORT
ON EUROPEAN PATENT APPLICATION NO.**                    EP 15 16 4778

This annex lists the patent family members relating to the patent documents cited in  the above-mentioned European search report.
The members are as contained in the European Patent Office EDP file on
The European Patent Office is in no way liable for these particulars which are merely given for the purpose of information.

30-09-2015

| Patent document cited in search report | Publication date | Patent family member(s) | Publication date |
|---|---|---|---|
| DE 4424336         A1 | 18-01-1996 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ABBAS, A. ; M. J LIMNAN ; Q. CHENG.** Patterned Resonance Plasmonic Microarrays for High-Performance SPR Imaging. *Analytical Chemistry,* 2011
- **AKIMOTO, T. ; K. IKEBUKURO ; I. KARUBE.** A Surface Plasmon Resonance Probe with a Novel Integrated Reference Sensor Surface. *Biosensors and Bioelectronics,* 2003, vol. 18 (12), 1447-1453
- **BAIN, C.D. ; TROUGHTON, E.B. ; TAO, Y.-T. ; EVALL, J. ; WHITESIDES, G.M. ; NUZZO, R.G.** Formation of Monolayer Films by the Spontaneous Assembly of Organic Thiols from Solution onto Gold. *J. Am. Chem. Soc.,* 1989, vol. 111, 321-335
- **BOECKER, D. ; A. ZYBIN ; V. HORVATIC ; C. GRUNWALD ; K. NIEMAX.** Differential Surface Plasmon Resonance Imaging for High-Throughput Bioanalyses. *Analytical Chemistry,* 2007, vol. 79 (2), 702-709
- **BOECKER, D. ; A. ZYBIN ; K. NIEMAX ; C. GRUNWALD ; V. M MIRSKY.** Noise Reduction by Multiple Referencing in Surface Plasmon Resonance Imaging. *Review of Scientific Instruments,* 2008, vol. 79, 023110
- **DHAVAN ; ANUJ ; MICHAEL ; CANVA ; TUAN VO-DINH.** Bimodal Behavior and Isobestic Transition Pathway in Surface Plasmon Resonance Sensing. *Optics Express,* 08 October 2012, vol. 20 (21), 23630-23642
- **EDDINGS, MARK A. ; JOSH W. ECKMAN ; CARLOS A. ARANA ; GIUSEPPE A. PAPALIA ; JOHN E. CONNOLLY ; BRUCE K. GALE ; DAVID G. MYSZKA.** Spot and Hop': Internal Referencing for Surface Plasmon Resonance Imaging Using a Three-Dimensional Microfluidic Flow Cell Array. *Analytical Biochemistry,* February 2009, vol. 385 (2), 309-313
- **HALPEM, A. R ; Y. CHEN ; R. M CORN ; D. KIM.** Surface Plasmon Resonance Phase Imaging Measurements of Patterned Monolayers and DNA Adsorption onto Microarrays. *Analytical Chemistry,* 2011
- **HASTINGS, J. T. ; J. GUO ; P. D. KEATHLEY ; P. B. KUMARESH ; Y. WEI ; S. LAW ; L. G. BACHAS.** Optimal Self-Referenced Sensing Using Long-and Short-Range Surface Plasmons. *Opt. Express,* 2007, vol. 15 (26), 17661-17672
- **JIRI HOMOLA.** Surface Plasmon Resonance Based Sensors. *Springer Series on Chemical Sensors and Biosensors Series,* 2006
- **JUNG ; JAEYEON ; JONG SEOL YUK ; KYUNGA NA ; OKGENE KIM ; JONGHWAN LEE ; KYUSIK YUN ; KWON-SOO HA ; JINHO HYUN.** Polymeric Optical Microscreen for High-Resolution Surface Plasmon Resonance Microarray Imaging. *Langmuir,* September 2007, vol. 23 (20), 10403-10406
- **JUNG, L. S ; C. T CAMPBELL ; T. M CHINOWSKY ; MIMI N. MAR ; S. S YEE.** Quantitative Interpretation of the Response of Surface Plasmon Resonance Sensors to Adsorbed Films. *Langmuir,* 1998, vol. 14 (19), 5636-5648
- **KASAROVA ; STEFKA NIKOLOVA ; NINA GEORGIEVA SULTANOVA ; CHRISTO DIMITROV IVANOV ; IVAN DECHEV NIKOLOV.** Analysis of the Dispersion of Optical Plastic Materials. *Optical Materials,* July 2007, vol. 29 (11), 1481-1490
- **LIEDBERG ; BO ; CLAES NYLANDER ; INGEMAR LUNSTROM.** Surface Plasmon Resonance for Gas Detection and Biosensing. *Sensors and Actuators,* 1983, vol. 4, 299-304
- **LINMAN, M. J ; A. ABBAS ; C.C. ROBERTS ; QUAN CHENG.** Etched Glass Microarrays with Differential Resonance for Enhanced Contrast and Sensitivity of Surface Plasmon Resonance Imaging Analysis. *Analytical Chemistry,* 2011, vol. 83, 5936-5943
- **LU ; HONGBO B. ; JI\VRÍ HOMOLA ; CHARLES T. CAMPBELL ; GARET G. NENNINGER ; SINCLAIR S. YEE ; BUDDY D. RATNER.** Protein Contact Printing for a Surface Plasmon Resonance Biosensor with on-Chip Referencing. *Sensors and Actuators B: Chemical,* 2001, vol. 74 (1), 91-99
- **NIZAMOV ; SHAVKAT ; VLADIMIR M. MIRSKY.** Self-Referencing SPR-Biosensors Based on Penetration Difference of Evanescent Waves. *Biosensors and Bioelectronics,* October 2011, vol. 28 (1), 263-269
- **O'BRIEN II ; MICHAEL J. ; S. R. J. BRUECK ; VICTOR H. PEREZ-LUNA ; LEONARD M. TENDER ; GABRIEL P. LOPEZ.** SPR Biosensors: Simultaneously Removing Thermal and Bulk-Composition Effects. *Biosensors and Bioelectronics,* 1999, vol. 14 (2), 145-154
- **PETERLINZ, K. A. ; R. GEORGIADIS.** Two-Color Approach for Determination of Thickness and Dielectric Constant of Thin Films Using Surface Plasmon Resonance Spectroscopy. *Optics Communications,* 1996, vol. 130 (4), 260-266

- **PILIARIK, M ; H VAISOCHEROVA ; J HOMOLA.** Towards Parallelized Surface Plasmon Resonance Sensor Platform for Sensitive Detection of Oligonucleotides. *Sensors and Actuators B: Chemical,* 30 January 2007, vol. 121 (1), 187-193
- **SCARANO ; SIMONA ; MARCO MASCINI ; ANTHONY P.F. TURNER ; MARIA MINUNNI.** Surface Plasmon Resonance Imaging for Affinity-Based Biosensors. *Biosensors and Bioelectronics,* 15 January 2010, vol. 25 (5), 957-966
- **SCARANO ; SIMONA ; COSIMO SCUFFI ; MARCO MASCINI ; MARIA MINUNNI.** Surface Plasmon Resonance Imaging (SPRi)-Based Sensing: A New Approach in Signal Sampling and Management. *Biosensors and Bioelectronics,* December 2010, vol. 26 (4), 1380-1385
- **SIGAL, GEORGE B. ; MILAN MRKSICH ; GEORGE M. WHITESIDES.** Using Surface Plasmon Resonance Spectroscopy To Measure the Association of Detergents with Self-Assembled Monolayers of Hexadecanethiolate on Gold. *Langmuir,* May 1997, vol. 13 (10), 2749-2755
- **SINGH, BIPIN K. ; ANDREW C. HILLIER.** Multicolor Surface Plasmon Resonance Imaging of Ink Jet-Printed Protein Microarrays. *Analytical Chemistry,* 2007, vol. 79 (14), 5124-5132
- **WAGNER, W. R ; A PRUSS.** The IAPWS Formulation 1995 for the Thermodynamic Properties of Ordinary Water Substance for General and Scientific Use. *J. Phys. Chem. Ref. Data,* 2002, vol. 31 (2), 387-535
- **WONG ; CHI LOK ; GEORGE CHUNG KIT CHEN ; XIAOCHAO LI ; BENG KOON NG ; PING SHUM ; PENG CHEN ; ZHIPING LIN ; CHINLON LIN ; MALINI OLIVO.** Colorimetric Surface Plasmon Resonance Imaging (SPRI) Biosensor Array Based on Polarization Orientation. *Biosensors and Bioelectronics,* September 2013, vol. 47, 545-552
- **WONG ; CHI LOK ; GEORGE CHUNG KIT CHEN ; BENG KOON NG ; SHUCHI AGARWAL ; ZHIPING LIN ; PENG CHEN ; HO PUI HO.** Multiplex Spectral Surface Plasmon Resonance Imaging (SPRI) Sensor Based on the Polarization Control Scheme. *Optics Express,* 2011, vol. 19 (20), 18965-18978
- **YU ; FANG ; WOLFGANG KNOLL.** Immunosensor with Self-Referencing Based on Surface Plasmon Diffraction. *Analytical Chemistry,* April 2004, vol. 76 (7), 1971-1975
- **ZACHER ; THOMAS ; ERIK WISCHERHOFF.** Real-Time Two-Wavelength Surface Plasmon Resonance as a Tool for the Vertical Resolution of Binding Processes in Biosensing Hydrogels. *Langmuir,* March 2002, vol. 18 (5), 1748-1759
- **ZYBIN ; ALEXANDER ; DANIEL BOECKER ; VLADIMIR M. MIRSKY ; KAY NIEMAX.** Enhancement of the Detection Power of Surface Plasmon Resonance Measurements by Optimization of the Reflection Angle. *Analytical Chemistry,* June 2007, vol. 79 (11), 4233-4236
- **ZYBIN ; ALEXANDER ; CHRISTIAN GRUNWALD ; VLADIMIR M. MIRSKY ; JÜRGEN KUHLMANN ; OTTO S. WOLFBEIS ; KAY NIEMAX.** Double-Wavelength Technique for Surface Plasmon Resonance Measurements: Basic Concept and Applications for Single Sensors and Two-Dimensional Sensor Arrays. *Analytical Chemistry,* 2005, vol. 77 (8), 2393-2399